# EUROPEAN PATENT SPECIFICATION

(11) **EP 2 890 747 B1**
(45) Date of publication and mention of the grant of the patent: **28.12.2016**
(21) Application number: 13742761.3
(22) Date of filing: 12.07.2013
(51) Int. Cl.: C09D 11/08, C09D 11/10, C09F 1/04, C08L 33/08

(54) **PROCESS FOR PRODUCTION OF ROSIN RESIN, PRODUCT OBTAINED BY SAID PROCESS AND USE THEREOF**
VERFAHREN ZUR HERSTELLUNG VON KOLOPHONIUMHARZ, NACH DEM VERFAHREN ERHALTENES PRODUKT UND VERWENDUNG
PROCÉDÉ DE PRODUCTION DE RÉSINE DE COLOPHANE, PRODUIT OBTENU AVEC LEDIT PROCÉDÉ ET SON UTILISATION

(30) Priority: 13.08.2012 PT 10649912
(43) Date of publication of application: 08.07.2015
(73) Proprietor: Euro Yser - Produtos Químicos, S.A., 3800-055 Aveiro (PT)
(72) Inventor: GAMEIRO, Davide Marques, P-3100-048 Abiúl (PT); COELHO, Jorge Fernando Jordão, P-3040-267 Coimbra (PT); SERRANO, João Pedro Cesário, P-3810-214 S. Bernardo - Aveiro (PT); ROCHA, Nádia Carina Silva Costa, P-3810-156 Aveiro (PT)
(74) Representative: Alves Moreira, Pedro
(86) International application number: PCT/PT2013/000043
(87) International publication number: WO 2014/027910

(56) References cited:
- EP-A1- 0 395 279
- EP-A2- 0 388 025
- US-A- 5 180 774

## Description

### FIELD OF THE INVENTION

The present invention relates to a process for production of a rosin resin, comprising the reaction between rosin, an acrylic copolymer and a divalent metal, further comprising an additional esterification step with a polyol and its use as binder in ink preparation.

### BACKGROUND OF THE INVENTION

Rosin is obtained from conifers and pines, being the solid residue resulting from the distillation operation of fresh liquid resin, after separation and collection of volatile liquid terpenes.

It is solid with an amber type appearance, having a variable color between yellow and brown depending on the extraction conditions and temperature of the distillation operation above mentioned.

Rosin consists of a mixture of di or tri-unsaturated monoacids, with twenty carbon atoms, having a central core formed with three adjacent rings of six carbon atoms each.

The acids that make up rosin belong to two basic classes:
- abietic, that include, in addition to abietic acid, neoabietic, palustric, levopimaric and dehydroabietic acids;
- pimaric, that include pimaric, isopimaric and sandaracopimaric acid.

From the first of the above mentioned classes, the abietic, neoabietic, palustric and levopimaric acids differ from each other only in the position of their two double bonds. The dehydroabietic acid is the only one that has three double bonds. All double bonds are endocyclic except in neoabietic acid which has an exocyclic double bond.

Pimaric and sandaracopimaric acid differ from each other in the configuration of the carbon atom to which a methyl group and ethenyl group are linked. Isopimaric acid and sandaracopimaric acid differ in the position of the endocyclic double bond.

This group of molecules shows low stability due to existence of conjugated double bonds, but its stability can be improved through chemical reactions that modify its structure, such as, for example, hydrogenation.

Currently, almost all resins used in graphic ink for rotogravure and *offset* are based in modified rosin with one or more simultaneous or successive reactions with dienophile and/or a phenol/formaldehyde resin, followed by esterification with a polyol. By changing the relative amounts of the starting materials and/or procedure, one can obtain a whole range of resins adapted to different technical-economic conditions in the formulation of graphic ink.

A disadvantage of the above described process is related with the fact that formaldehyde is a toxic substance and the majority of the used phenols are alkylphenoltype which are classified as endocrine disruptors. Therefore, the risk of contacting this type of substances exists.

Patent application JP 2000159867 (A), entitled "Resin for printing ink", relates to a resin prepared by reacting rosin with dienophile (for example, maleic anhydride) and a polyol (for example, glycerol or pentaerythritol), the reaction being carried out at 230 - 290 °C for 5 to 15 hours, in the presence of catalyst selected from MgO, ZnO or CaO and optionally an antifoam agent.

Patent Application US 5814701 (A) entitled "Process for the production of water soluble modified rosin ester vehicles for laminating inks", relates to an esterification process with a polyol from the reaction product between rosin and at least a carboxylated dienophile, followed by reaction of the obtained product with an acrylic copolymer between 175 and 185 °C for 15 to 45 minutes, to produce a binder with adequate properties.

Patent Application US 5180774 (A), entitled "Modified rosin esters and their use in printing inks", relates to a binder comprising a rosin ester prepared by a process in two steps:
- in the first step, an adduct is formed between rosin and a dienophile, said adduct is reacted with a polyol to form an ester, which is then reacted with an acrylic polymer to form a hardened rosin ester;
- in the second step, the product of the previous step is reacted with an adduct (formed by reaction between rosin and a dienophile) and an acrylic polymer, the resultant product of this reaction is first reacted with a zinc compound (metal zinc, zinc oxide or hydroxide) and then with calcium hydroxide.

The above described processes, although not using phenolic compounds, include, in an optional manner, a first step for formation of an adduct by a Diels-Alder reaction between rosin acids and a dienophile such as, for example, fumaric acid or maleic anhydride 0388 025 discloses a gravure printing ink; which comprises a resin binder having high dilution and is based on a composition comprising a modified metal rosin resinate and a dilution polymer such as polystyrene.

All the products of prior art show great problems to the user, such as the incapacity to keep a high viscosity in diluted solutions and the viscosity of its solutions are in general very unstable, usually increasing with shelf life.

Surprisingly, the process of the present invention provides a product (a rosin resin) which although being a hard resin, as adequate for printing ink, allows for high viscosities in diluted solutions, produces solutions which properties are stable with time and also with high mechanical resilience, allowing printings with high resistance to abrasion.

### SUMMARY OF THE INVENTION

The present invention relates to a process for production of rosin resin comprising the steps of:
a) heating with agitation previously melted rosin to a temperature in the range of 200 to 260 °C and adding an acrylic copolymer; and
b) adding a source of divalent metal and allowing to react at a temperature in the range of 200 to 260 °C until a constant viscosity transparent resin is obtained.

In a preferred embodiment, step a) is carried out at a temperature in the range of 200 to 230 °C, and step b) is carried out at a temperature in the range of 230 to 260 °C.

In one aspect of the present invention, the process further comprises an additional esterification step of the product obtained in step b) with a polyol at a temperature in the range of 200 to 260 °C, until a constant viscosity transparent resin is obtained.

In other aspect of the present invention, the acrylic copolymer comprises an element selected from the group consisting of acrylic acid, esters derived from acrylic acid, methacrylic acid, esters derived from methacrylic acid, hydroxyalkyl acrylates, hydroxyalkyl methacrylates and mixtures thereof and another element selected from the group consisting of styrene, alpha-methyl styrene, ethylene, ethylene and vinyl acetate copolymer and combinations thereof.

In one embodiment, the copolymer is a styrene and methyl methacrylate copolymer.

In other embodiment, the acrylic copolymer to rosin ratio is comprised between 0.2:1 and 1.5:1.

In a preferred embodiment, the acrylic copolymer to rosin ratio is comprised between 0.5:1 and 1.2:1.

In other aspect of the present invention, the divalent metal source is selected from the group consisting of calcium, zinc, magnesium compounds and combinations thereof.

In one embodiment, the divalent metal source is selected from the group consisting of calcium oxide, calcium hydroxide, calcium acetate, zinc oxide, zinc hydroxide, magnesium oxide and combinations thereof.

In a preferred embodiment, the divalent metal source consists of mixture of zinc oxide in a ratio to rosin of 0.01:1 to 0.1:1 and calcium acetate in a ratio to rosin of 0.005:1 to 0.1:1.

In yet another aspect of the present invention, polyol is selected from the group consisting of glycerol, pentaerythritol, trimethylolethane, trimethylolpropane, neopentyl glycol, cyclohexanedimethanol and mixtures thereof.

In one embodiment, the polyol to rosin ratio is comprised between 0.02:1 and 0.5:1.

In a preferred embodiment, the process comprises the steps of:
a) heating with agitation previously melted rosin at a temperature of 200 °C and then adding a styrene and methyl methacrylate copolymer in a ratio to rosin of 0.429:1;
b) heating the previous mixture at 250 °C, then adding zinc oxide in a ratio to rosin of 0.062:1, calcium acetate in a ratio to rosin of 0.024:1 and allowing the mixture to react at a temperature of 250 °C until a transparent resin is obtained; and
c) adding glycerol in a ratio to rosin of 0,114:1 and allowing to react at a temperature of 250 °C, until a constant viscosity is obtained which corresponds to a minimum flow time of 9 s in the DIN 6 cup.

The process of the present invention provides a rosin resin for use as binder in the preparation of graphic inks.

### DETAILED DESCRIPTION OF THE INVENTION

The present invention relates to a process for production of rosin resin that acts as binder in the preparation of inks.

Viscosity is the most important parameter for characterization of the resin obtained via the process of the present invention.

Viscosity can be readily measured by a comparative method that consists of measuring the flow time of a given liquid volume through an orifice of known diameter. The measuring unit of this flow time is second.

In practice, a cylindrical container with a known volume and an orifice of determined diameter and located in the center of the base is used. The container is totally filled with the liquid which viscosity is to be determined and the time from the start of the flow until the first interruption of the flow is measured. From the available measuring instruments, Ford, DIN or GS cups are commonly used for this purpose.

In the present description, the rosin resin is characterized by measuring the flow time, in seconds, of a 30% solids solution in toluene at a temperature of 22 °C in DIN 6 cup (where the orifice diameter is 6 mm).

Another parameter used for the characterization of rosin resin is the dilution rate.

In the present description, the dilution rate expressed in percentage, is numerically equal to the solvent weight (toluene) which is necessary to add to 100 grams of resin solution at 30% solids in toluene, to obtain a viscosity corresponding to a flow time of 30 seconds in a GS cup where the orifice diameter is 3 mm.

Another usually evaluated parameter in this industry is the color of a resin solution in a given solvent.

The color is measured using the Gardner Scale, a visual scale described in the ASTM D1544 Standard (Standard Test Method for Color of Transparent Liquids (Gardner Color Scale)), with 18 levels, wherein level 1 represents a very pale yellow and level 18 represents brownish red. By visual comparison of the color of the resin solution with a pre-set scale, a 1 to 18 color level is attributed to the color of the solution.

In the present description, the color of a solution of 50% solids in toluene is measured.

The rosin used in the present invention can be obtained from live pines, making incisions on the tree and collecting the exudate in a container placed on the tree trunk, then distilling the volatile components to obtain rosin, which is the solid residue of this process.

The rosin can also be obtained from previously cut pine trunks; the trunks are reduced to wood chips, immersed in a solvent that extracts fatty acids and turpentine, in addition to rosin. The rosin obtained from this process is so-called wood rosin.

Another source of rosin is tall oil resin obtained by distillation of "tall oil", a byproduct obtained in a soap form of wood alkaline extraction during the Kraft process.

In the present description, the term "rosin" means the product obtained for any of the above mentioned processes.

Independently of the explicit presence of a quantitative term "about X", any X value shown in the present description must be interpreted as an approximate value of the actual X value, as such approximation from the actual value would be reasonably expected by the skilled in the art due to experimental and/or measuring conditions that introduce deviations from the actual value.

Unless indicated otherwise, percentages used in the present description refer to weight percentages.

The present invention relates to a process for production of a rosin resin, comprising the steps of:
a) heating with agitation previously melted rosin to a temperature in the range of 200 to 260 °C and adding an acrylic copolymer; and
b) adding a source of divalent metal and allowing to react at a temperature in the range of 200 to 260 °C until a constant viscosity transparent resin is obtained.

In a preferred embodiment, step a) is carried out at a temperature in the range of 200 to 230 °C and step b) is carried out at a temperature in the range of 230 to 260 °C.

The acrylic copolymer used in the process of the present invention comprises an element selected from the group consisting of acrylic acid, esters derived from acrylic acid, methacrylic acid, esters derived from methacrylic acid, hydroxyalkyl acrylates, hydroxyalkyl methacrylates and mixtures thereof and another element selected from the group consisting of styrene, alpha-methyl styrene, ethylene, ethylene and vinyl acetate copolymer and combinations thereof.

Preferably, the used copolymer is a styrene and methyl methacrylate copolymer commercially available from INEOS NOVA under the trade name NAS^{®} 30.

The acrylic copolymer is used in the process of the present invention in a weight ratio to rosin from 0.2:1 to 1.5:1, preferably, in a ratio from 0.5:1 to 1.2:1.

The reaction between the acrylic copolymer and rosin is carried out in the presence of a divalent metal source.

The divalent metal source is selected from the group consisting of compounds of calcium, zinc and magnesium and combinations thereof. Preferably, the divalent metal source is selected from the group consisting of calcium oxide, calcium hydroxide, calcium acetate, zinc oxide, zinc hydroxide, magnesium oxide and combinations thereof.

In one embodiment, the reaction can be carried out in the presence of a zinc oxide mixture, in a ratio to rosin comprised between 0.01:1 and 0.1:1 and calcium acetate in a ratio to rosin comprised between 0.005:1 and 0.1:1.

Preferably, the reaction can be carried out in the presence of a zinc oxide mixture, in a ratio to rosin of 0.01:1 and calcium acetate in a ratio to rosin of 0.007:1.

In another embodiment, the reaction can be carried out in the presence of a zinc oxide mixture, in a ratio to rosin comprised between 0.01:1 and 0.1:1 and magnesium oxide in a ratio to rosin comprised between 0.005:1 and 0.03:1.

The process according to the present invention can further comprise an additional esterification step with a polyol added immediately after step b), wherein the reaction occurs at a temperature in the range of 200 °C to 260 °C.

The polyol used in the process of the present invention is selected from glycerol, pentaerythritol, trimethylolethane, trimethylolpropane, neopentyl glycol, cyclohexanedimethanol or other similar polyols and combinations thereof, and the polyol to rosin ratio is comprised between 0.02:1 and 0.5:1.

The rosin resins obtained according to the process of the present invention are characterized by a low viscosity (flow time 9 to 40 s) and by a dilution rate of at least 150%.

Although the process of the present invention does not include a first reaction step between rosin and a dienophile, which is an advantage as allows to reduce the running time, the resultant product shows improved characteristics in view of the prior art (see Example 9), demonstrating that it is particularly adequate to be used as binder in the production of ink, because:
- it allows to obtain high viscosities in diluted solutions, a property that is particularly useful in rotogravure graphic ink;
- it allows to obtain stable solutions, which properties are kept unchanged after even long time periods, which is a very important characteristic in the user's point of view;
- shows high mechanical resilience, allowing printings of high resistance to abrasion.

For a better understanding of the invention, it is hereinafter described, for illustration purposes and not by limitation, examples of application of the process of the present invention.

### EXAMPLES

### Example 1 - Production of a rosin resin for rotogravure printing ink.

In a reactor inertized with nitrogen atmosphere, equipped with temperature sensor, heating jacket, reflux condenser and stirrer, 1500 parts of rosin were melted at a temperature of 180 °C and after fusing rosin was heated with agitation at a temperature of 200 °C.

1500 parts of a styrene and methyl methacrylate copolymer (NAS^{®} 30, commercially available from INEOS NOVA) were added for 60 minutes, the mixture was heated up to 250 °C, 15 parts of zinc oxide and 10 parts of calcium acetate were added.

It was left reacting at a temperature of 250 °C until constant viscosity, which should at least correspond to a minimum flow time of 9 s in DIN 6 cup.

The product thus obtained showed the following properties
- Color (Gardner Scale): 9;
- Viscosity: 10 s;
- Dilution rate: 156%, corresponding to the addition of 180 mL of toluene to 100 g of resin solution at 30% of solids, in order to obtain a flow time of 30 seconds in GS 3 mm cup, at a temperature of 22 °C.

### Example 2

In a reactor inertized with nitrogen atmosphere, equipped with temperature sensor, heating jacket, reflux condenser and stirrer, 1500 parts of rosin were melted at a temperature of 180 °C and then rosin was heated with agitation at a temperature of 200 °C.

1000 parts of a styrene and methyl methacrylate copolymer (NAS^{®} 30, commercially available from INEOS NOVA) were added for 60 minutes, the mixture was heated up to 250 °C, 130 parts of zinc oxide and 50 parts of calcium acetate were added.

It was left reacting at a temperature of 250 °C until the reactor content was transparent after cooling down to room temperature (carried out upon removing a sample from the reactor).

Then, 50 parts of pentaerythritol were added and the reactor content was esterified at a temperature of 250 °C until constant viscosity, which should at least correspond to a flow time of 9 s in DIN 6 cup.

The product obtained showed the following properties:
- Color (Gardner Scale): 9;
- Viscosity: 12 s;
- Dilution rate: 173%.

### Example 3

In a reactor inertized with nitrogen atmosphere, equipped with temperature sensor, heating jacket, reflux condenser and stirrer, 1500 parts of rosin were melted at a temperature of 180 °C and then rosin was heated with agitation at a temperature of 200 °C.

1690 parts of styrene and methyl methacrylate copolymer (NAS^{®} 30, commercially available from INEOS NOVA) were added for 60 minutes, the mixture was heated up to 250 °C, 15 parts of zinc oxide and 10 parts of calcium acetate were added.

It was left reacting at a temperature of 250 °C until constant viscosity which should at least correspond to a minimum flow time of 9 s in DIN 6 cup.

The product obtained showed the following properties:
- Color (Gardner Scale): 9;
- Viscosity: 12 s;
- Dilution rate: 167%.

### Example 4

In a reactor inertized with nitrogen atmosphere, equipped with temperature sensor, heating jacket, reflux condenser and stirrer, 1800 parts of rosin were melted at a temperature of 180 °C and then rosin was heated with agitation at a temperature of 200 °C.

1200 parts of a styrene and methyl methacrylate copolymer (NAS^{®} 30, commercially available from INEOS NOVA) were added for 60 minutes, the mixture was heated up to 250 °C, 130 parts of zinc oxide and 50 parts of calcium acetate were added.

It was left reacting at a temperature of 250 °C until the reactor content was transparent after cooling down to room temperature (carried out upon removing a sample from the reactor).

Then, 90 parts of glycerin were added and the reactor content was esterified at a temperature of 250 °C until constant viscosity, which should at least correspond to a flow time of 9 s in DIN 6 cup.

The product obtained showed the following properties:
- Color (Gardner Scale): 9;
- Viscosity: 15 s;
- Dilution rate: 203%.

### Example 5

In a reactor inertized with nitrogen atmosphere, equipped with temperature sensor, heating jacket, reflux condenser and stirrer, 2100 parts of rosin were melted at a temperature of 180 °C and then rosin was heated with agitation at a temperature of 200 °C.

900 parts of a styrene and methyl methacrylate copolymer (NAS^{®} 30, commercially available from INEOS NOVA) were added for 60 minutes, the mixture was heated up to 250 °C, 130 parts of zinc oxide and 50 parts of calcium acetate were added.

It was left reacting at a temperature of 250 °C until the reactor content was transparent after cooling down to room temperature (carried out upon removing a sample from the reactor).

Then, 240 parts of glycerin were added and the reactor content was esterified at a temperature of 250 °C until constant viscosity, which should at least correspond to a flow time of 9 s in DIN 6 cup.

The product obtained showed the following properties:
- Color (Gardner Scale): 9;
- Viscosity: 13 s;
- Dilution rate: 172%.

### Example 6

In a reactor inertized with nitrogen atmosphere, equipped with temperature sensor, heating jacket, reflux condenser and stirrer, 1800 parts of rosin were melted at a temperature of 180 °C and then rosin was heated with agitation at a temperature of 200 °C.

1200 parts of a styrene and methyl methacrylate copolymer (NAS^{®} 30, commercially available from INEOS NOVA) were added for 60 minutes, the mixture was heated up to 250 °C, 130 parts of zinc oxide and 50 parts of calcium acetate were added.

It was left reacting at a temperature of 250 °C until the reactor content was transparent after cooling down to room temperature (carried out upon removing a sample from the reactor).

Then, 90 parts of trimethylolethane were added and the reactor content was esterified at a temperature of 250 °C until constant viscosity, which should at least correspond to a flow time of 9 s in DIN 6 cup.

The product obtained showed the following properties:
- Color (Gardner Scale): 9;
- Viscosity: 15 s;
- Dilution rate: 203%.

### Example 7

In a reactor inertized with nitrogen atmosphere, equipped with temperature sensor, heating jacket, reflux condenser and stirrer, 1800 parts of rosin were melted at a temperature of 180 °C and then rosin was heated with agitation at a temperature of 200 °C.

900 parts of an ethylene and methyl methacrylate copolymer were added for 60 minutes, the mixture was heated up to 250 °C, 130 parts of zinc oxide and 50 parts of calcium acetate were added.

It was left reacting at a temperature of 250 °C until the reactor content was transparent after cooling down to room temperature (carried out upon removing a sample from the reactor).

Then, 90 parts of trimethylolethane were added and the reactor content was esterified at a temperature of 250 °C until constant viscosity, which should at least correspond to a flow time of 9 s in DIN 6 cup.

The product obtained shows the following properties:
- Color (Gardner Scale): 9;
- Viscosity: 10 s;
- Dilution rate: 180%.

### Example 8

In a reactor inertized with nitrogen atmosphere, equipped with temperature sensor, heating jacket, reflux condenser and stirrer, 1800 parts of rosin were melted at a temperature of 180 °C and then rosin was heated with agitation at a temperature of 200 °C.

1200 parts of a styrene and methyl methacrylate copolymer (NAS^{®} 30, commercially available from INEOS NOVA) were added for 60 minutes, the mixture was heated up to 250 °C, 130 parts of zinc oxide and 13 parts of magnesium oxide were added.

The °C is left reacting at a temperature of 250 until the reactor content was transparent after cooling down to room temperature (carried out upon removing a sample from the reactor).

Then, 90 parts of trimethylolethane were added and the reactor content was esterified at a temperature of 250 °C until constant viscosity, which should at least correspond to a flow time of 9 s in DIN 6 cup.

The product obtained shows the following properties:
- Color (Gardner Scale): 9;
- Viscosity: 13 s;
- Dilution rate: 170%.

### Example 9

To analyze the stability of the properties of the resin with time and at room temperature, comparative analyses between a varnish produced from the resin obtained according to Example 1 (designated example 1 in the following table) and a commercially available product (designated commercial Varnish in the following table) were carried out.

For each of the products, the viscosity of the solution was measured with time, in the conditions referred to in examples 1 to 6 (designated µ_{DIN6} in the following table) and the dilution rate was calculated, as refereed to in examples 1 to 8.

| Time (days) | µ_{DIN6} (s) | | Dilution Rate (%) | |
|---|---|---|---|---|
| | Commercial varnish | Example 1 | Commercial varnish | Example 1 |
| 0 | 53 | 10 | 126 | 156 |
| 8 | 72 | 11 | 139 | 155 |
| 15 | 290 | 10 | 160 | 157 |

It can be seen that the varnish produced from the resin obtained according to example 1 keeps its viscosity with time, whereas 15 days are enough to observe a significant increase in the viscosity of the commercially available varnish.

The dilution rate shows a similar variation, as in the case of the prior art product it is necessary to add increasing volumes of solvent to keep a certain viscosity, whereas the dilution rate of the product obtained according to example 1 is constant, showing the stability with time of the properties of the product.

## Claims

1. A process for production of rosin resin **characterized by** comprising the steps of:
a) heating with agitation previously melted rosin to a temperature in the range of 200 to 260 °C and adding an acrylic copolymer; and
b) adding a source of divalent metal and allowing to react at a temperature in the range of 200 to 260 °C until a constant viscosity transparent resin is obtained; wherein the viscosity is refereed to the dilution rate; which is expressed in percentage and is numerically equal to the weight of toluene which is necessary to add to 100 grams of resin solution at 30% solids in toluene, to obtain a viscosity corresponding to a flow time of 30 seconds in a GS cup where the orifice diameter is 3 mm at a temperature of 22°C.

2. The process according to claim 1, wherein
- step a) is carried out at a temperature in the range of 200 to 230 °C; and,
- step b) is carried out at a temperature in the range of 230 to 260 °C.

3. The process according to claim 1, further comprising an additional esterification step of the product obtained in step b) with a polyol at a temperature in the range of 200 °C to 260 °C, until constant viscosity transparent resin is obtained.

4. The process according to any one of claims 1 to 3, wherein the acrylic copolymer comprises an element selected from the group consisting of acrylic acid, esters derived from acrylic acid, methacrylic acid, esters derived from methacrylic acid, hydroxyalkyl acrylates, hydroxyalkyl methacrylates and mixtures thereof and another element selected from the group consisting of styrene, alpha-methyl styrene, ethylene, ethylene and vinyl acetate copolymer and combinations thereof.

5. The process according to the previous claim, wherein the copolymer is a styrene and methyl methacrylate copolymer.

6. The process according to claim 1, wherein the ratio of acrylic copolymer to rosin is comprised between 0.2:1 and 1.5:1.

7. The process according to the previous claim, wherein the ratio of acrylic copolymer to rosin is comprised between 0.5:1 and 1.2:1.

8. The process according to any one of claims 1 to 7, wherein the divalent metal source is selected from the group consisting of compounds of calcium, zinc, magnesium and combinations thereof.

9. The process according to the previous claim, wherein the divalent metal source is selected from the group consisting of calcium oxide, calcium hydroxide, calcium acetate, zinc oxide, zinc hydroxide, magnesium oxide and combinations thereof.

10. The process according to the previous claim, wherein the divalent metal source consist of mixture of zinc oxide in a ratio to rosin of 0.01:1 to 0.1:1 and calcium acetate in a ratio to rosin of 0.005:1 to 0.1:1.

11. The process according to claim 3, wherein the polyol is selected from the group consisting of glycerol, pentaerythritol, trimethylolethane, trimethylolpropane, neopentyl glycol, cyclohexanedimethanol and mixtures thereof.

12. The process according to claim 3, wherein the ratio of polyol to rosin is comprised between 0.02:1 and 0.5:1.

13. The process according to any one of the previous claims, comprising the steps of:
a) melting rosin, heating with agitation at a temperature of 200 °C and then adding an acrylic copolymer having methyl methacrylate and styrene in a ratio to rosin of 0.429:1;
b) heating the previous mixture at 250 °C, then adding zinc oxide in a ratio to rosin of 0.062:1, calcium acetate in a ratio to rosin of 0.024:1 and allowing the mixture to react at a temperature of 250 °C until a transparent resin is obtained; and
c) adding glycerol in a ratio to rosin of 0,114:1 and allowing to react at a temperature of 250 °C, until a constant viscosity is obtained which corresponds to a minimum flow time of 9 s in the DIN 6 cup.

14. A rosin resin obtained by the process according to any one of claims 1 to 12, **characterized by**:
a) a flow time of a solution at 30% of solids in toluene, in DIN 6 cup, at a temperature of 22 °C, between 9 s and 40 s; and,
b) a dilution rate of at least 150%, corresponding to the addition of at least 172 mL of toluene to 100 g of resin solution at 30% of solids in toluene, to obtain a flow time of 30 s in GS 3 mm cup at a temperature of 22 °C.

15. Use of the resin according to claim 14, wherein the resin is applied as binder in the preparation of inks.

## Patentansprüche

1. Verfahren für die Herstellung von Geigenharz, **dadurch gekennzeichnet**, umfassend die Schritte von
a) Heizen mit Rühren von zuvor geschmolzem Geigenharz, bis einen Temperaturbereich von 200 bis 260 °C und mit Hinzufügen eines Acryl-Copolymers; und
b) Beifügen einer Quelle von doppelwertigem Metall und erlaubend es bei einem Temperaturbereich von 200 bis 260 °C zu reagieren, bis ein durchsichtiges Geigenharz mit beständiger Zähflüssigkeit erhalten wird; wobei die Zähflüssigkeit auf die Verdünnungsrate hinwiesen wird; die als Prozentsatz ausgedrückt wird und zahlenmässig gleich wie das Toluol-Gewicht, das um 100 Gramm in einer Geigenharz-Lösung mit 30%-Feststoffe im Toluol hinzuzufügen, erforderlich ist, um eine Zähflüssigkeit, die einer Fließzeit von 30 Sekunden in einem GS-Becher entspricht, zu erhalten, wobei der Bohrungsdurchmesser 3 mm bei einer Temperatur von 22 °C beträgt.

2. Verfahren nach Anspruch 1, wobei
- Schritt a) bei einem Temperaturbereich von 200 bis 230 °C durchgeführt wird; und
- Schritt b) bei einem Temperaturbereich von 230 bis 260 °C durchgeführt wird.

3. Verfahren nach Anspruch 1, weiter umfassend einen zusätzlichen Schritt für das Esterbilden des im Schritt b) erhaltenen Erzeugnisses, mit einem Polyol bei einem Temperaturbereich von 200 °C bis 260 °C, bis ein durchsichtiges Geigenharz mit beständiger Zähflüssigkeit erhalten wird.

4. Verfahren nach einem der Ansprüche 1 bis 3, wobei der Acryl-Copolymer ein Element aus der Gruppe bestehend aus Acrylsäure, aus Acrylsäure abgeleitete Estere, Methacrylsäure, aus Methacrylsäure abgeleitete Estere, Hydroxyalkyl-Acrylate, Hydroxyalkyl-Methacrylate und Mischungen davon und ein anderes Element aus der Gruppe bestehend aus Styren, Alphamethylstyren, Ethylen, Copolymer aus Ethylen und Vinylacetat und davon ausgewählte Verbindungen, umfasst.

5. Verfahren nach dem vorhergehenden Anspruch, wobei der Copolymer ein Styren- und Methylmethacrylat-Copolymer ist.

6. Verfahren nach Anspruch 1, wobei das Verhältnis von Acryl-Copolymer zum Geigenharz zwischen 0,2:1 und 1,5:1 liegt.

7. Verfahren nach dem vorhergehenden Anspruch, wobei das Verhältnis von Acryl-Copolymer zum Geigenharz zwischen 0,5:1 und 1,2:1 liegt.

8. Verfahren nach einem der Ansprüche 1 bis 7, wobei die Quelle von doppelwertigem Metall aus der Gruppe bestehend aus Zusammensetzungen von Calcium, Zink, Magnesium und Verbindungen davon ausgewählt wird.

9. Verfahren nach dem vorhergehenden Anspruch, wobei die Quelle von doppelwertigem Metall aus der Gruppe bestehend aus Calciumoxid, Calciumhydroxid, Calciumacetat, Zinkoxid, Zinkhydroxid, Magnesiumoxid und Verbindungen davon ausgewählt wird.

10. Verfahren nach dem vorhergehenden Anspruch, wobei die Quelle von doppelwertigem Metall aus einer Mischung von Zinkoxid in einem Verhältnis von 0,01:1 bis 0,1:1 zum Geigenharz und Calciumacetat in einem Verhältnis von 0,005:1 bis 0,1:1 zum Geigenharz besteht.

11. Verfahren nach Anspruch 3, wobei das Polyol aus der Gruppe bestehend aus Glycerol, Pentaerythritol, Trimethylolethan, Trimethylolpropan, Neopentylglykol, Cyclohexanedimethanol und Mischungen davon ausgewählt wird.

12. Verfahren nach Anspruch 3, wobei das Verhältnis von Polyol zum Geigenharz zwischen 0,02:1 und 0,5:1 liegt.

13. Verfahren nach einem der vorhergehenden Ansprüche, umfassend die Schritte von
a) Schmelzen des Geigenharzes, Heizen mit Rühren bei einer Temperatur von 200 °C und dann Hinzufügen eines Acryl-Copolymers, der Methyl-Methacrylat und Styren in einem Verhältnis von 0,429:1 zum Geigenharz beeinhaltet;
b) Heizen der vorhergehenden Mischung bei 250 °C, dann Zinkoxid in einem Verhältnis von 0,062:1 zum Geigenharz, Calciumacetat in einem Verhältnis von 0,024:1 zum Geigenharz beizufügen und erlaubend die Mischung bei einer Temperatur von 250 °C zu reagieren, bis ein durchsichtiges Geigenharz erhalten wird; und
c) Beifügen von Glycerol in einem Verhältnis von 0,114:1 zum Geigenharz und erlaubend es bei einer Temperatur von 250 °C zu reagieren, bis eine beständige Zähflüssigkeit, die am wenigstens einer Fließzeit von 9 Sekunden im DIN 6 Becher entspricht, erhalten wird.

14. Geigenharz aus dem Verfahren nach einem der Ansprüche 1 bis 12 erhalten, durch
a) eine Fließzeit einer Lösung mit 30%-Feststoff im Toluol, im DIN 6 Becher, bei einer Temperatur von 22 °C, zwischen 9 und 40 Sekunden; und
b) eine Lösungsrate von wenigstens 150%, die einem Beifügen von wenigstens 172 mL Toluol zu 100 g von Geigenharz-Lösung mit 30%-Feststoff im Toluol entspricht, um einer Fließzeit von 30 Sekunden in einem GS 3 mm Becher, bei einer Temperatur von 22 °C zu erhalten,
gekennzeichnet.

15. Verwendung vom Geigenharz nach Anspruch 14, wobei das Geigenharz als Bindemittel in der Vorbereitung von Tinten angewendet wird.

## Revendications

1. Procédé pour la production de colophane, **caractérisé en ce qu'**il comprend les étapes suivantes:
a) Chauffer en agitant la colophane fondue préalablement sous une température dans la gamme de 200 à 260 °C et en ajoutant un copolymère acrylique; et
b) Ajouter une source de métal divalent et lui permettre de réagir sous une température dans la gamme de 200 à 260 °C, jusqu'à obtenir une colophane transparente à viscosité constante; la viscosité se référant à la vitesse de dilution; laquelle s'exprimant en pourcentage et qui est numériquement égale au poids de toluène qui est nécessaire pour ajouter jusqu'à 100 grammes de solution de colophane à 30% de solides en toluène, pour obtenir une viscosité correspondant à un temps d'écoulement de 30 secondes, dans un gobelet GS, où le diamètre de l'orifice est de 3 mm à une température de 22 °C.

2. Procédé selon la revendication 1, étant que
- L'étape a) a lieu sous une température dans la gamme de 200 à 230 °C; et
- L'étape b) a lieu sous une température dans la gamme de 230 à 260 °C.

3. Procédé selon la revendication 1, comprenant en plus une étape d'estérification additionnelle du produit obtenu à l'étape b) avec un polyol sous une température dans la gamme de 200 °C à 260 °C, jusqu'à obtenir une colophane transparente à viscosité constante.

4. Procédé selon quelqu'une des revendications 1 à 3, étant que le copolymère acrylique comprend un élément choisi parmi le groupe consistant à de l'acide acrylique, des esters dérivés de l'acide acrylique, de l'acide méthacrylique, des esters dérivés de l'acide méthacrylique, des acrylates hydroxyalkyliques, des méthacrylates hydroxyalkyliques et des mélanges de ceux-ci et un autre élément choisi parmi le groupe consistant au styrène, alpha-méthyle styrène, éthylène, copolymère à éthylène et acétate de vinyle et des composés de ceux-ci.

5. Procédé selon la revendication précédente, le copolymère étant un copolymère au styrène et au méthacrylate de méthyle.

6. Procédé selon la revendication 1, le rapport entre le copolymère acrylique et la colophane étant compris entre 0,2:1 et 1,5:1.

7. Procédé selon la revendication précédente, le rapport entre le copolymère acrylique et la colophane étant compris entre 0,5:1 et 1,2:1.

8. Procédé selon quelqu'une des revendications 1 à 7, la source de métal divalent étant choisie parmi le groupe consistant à des composés au calcium, zinc, magnésium et des composés de ceux-ci.

9. Procédé selon la revendication précédente, la source de métal divalent étant choisie parmi le groupe consistant à l'oxyde de calcium, l'hydroxyde de calcium, l'acétate de calcium, l'oxyde de zinc, l'hydroxyde de zinc, l'oxyde de magnésium et des composés de ceux-ci.

10. Procédé selon la revendication précédente, la source de métal divalent consistant à un mélange d'oxyde de zinc dans un rapport de 0,01:1 à 0,1:1 avec la colophane et de l'acétate de calcium dans un rapport de 0,005:1 à 0,1:1 avec la colophane.

11. Procédé selon la revendication 3, le polyol étant choisi parmi le groupe consistant à du glycérol, du pentaérythritol, du triméthyloléthane, du triméthylolpropane, du néopentyl-glycol, du cyclohexanediméthanol et des mélanges de ceux-ci.

12. Procédé selon la revendication 3, le rapport du polyol avec la colophane étant compris entre 0,02:1 et 0,5:1.

13. Procédé selon quelqu'une des revendications précédentes, comprenant les étapes suivantes:
a) Faire fondre la colophane, la chauffer en l'agitant sous une température de 200 °C et en ajoutant ensuite un copolymère acrylique avec du méthyl-méthacrylate et du styrène, dans un rapport de 0,429:1 avec la colophane;
b) Chauffer le mélange ci-dessus à 250 °C, ajouter ensuite de l'hydroxyde de zinc dans un rapport de 0,062:1 avec la colophane, de l'acétate de calcium dans un rapport de 0,024:1 avec la colophane et permettre au mélange de réagir sous une température de 250 °C, jusqu'à obtenir une colophane transparente; et
c) Ajouter du glycérol dans un rapport de 0,114:1 avec la colophane et permettre au mélange de réagir sous une température de 250 °C, jusqu'à obtenir une viscosité constante, qui correspond à un temps minimum d'écoulement de 9 secondes, dans le gobelet DIN 6.

14. Colophane obtenue par le procédé selon quelqu'une des revendications 1 à 12, **caractérisé par**:
a) Un temps d'écoulement d'une solution à 30% de solides dans le toluène, dans le gobelet DIN 6, sous une température de 22 °C, entre 9 et 40 secondes; et
b) Une vitesse de dilution d'au moins 150%, correspondant à l'addition d'au moins 172 mL de toluène à 100 g de solution de colophane à 30% de solides en toluène, pour obtenir un temps d'écoulement de 30 secondes dans un gobelet GS à 3 mm, sous une température de 22 °C.

15. Emploi de la colophane selon la revendication 14, la colophane étant appliquée comme liant dans la préparation d'encres.
